Europäisches Patentamt

European Patent Office

Office européen des brevets

(19)

(11) Numéro de publication: **0 048 445**
**B1**

(12) **FASCICULE DE BREVET EUROPEEN**

(45) Date de publication du fascicule du brevet: **18.05.83**

(51) Int. Cl.³: **F 16 H  1/40,** B 60 K  17/16

(21) Numéro de dépôt: **81107347.7**

(22) Date de dépôt: **17.09.81**

(54) **Différentiel de transmission.**

(30) Priorité: **19.09.80 FR  8020211**

(43) Date de publication de la demande:
**31.03.82 Bulletin 82/13**

(45) Mention de la délivrance du brevet:
**18.05.83 Bulletin 83/20**

(84) Etats contractants désignés:
**BE DE GB IT NL SE**

(56) Documents cités:
**US - A - 3 310 999**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Lamy, Jean Michel**
**9 Villa Brune**
**F-75012 Paris (FR)**

(74) Mandataire: **Casalonga, Axel et al,**
**BUREAU D.A. CASALONGA OFFICE JOSSE &**
**PETIT Baaderstrasse 12-14**
**D-8000 München 5 (DE)**

Courier Press, Leamington Spa, England.

### Différentiel de transmission

La présente invention se rapporte aux différentiels de transmission utilisés notamment pour l'entrainement des roues motrices des véhicules automobiles et comprenant un boîtier renfermant deux planétaires coniques menés et des satellites coniques d'entrainement de ces derniers montés fous sur un axe monté au travers d'orifices correspondants aménagés dans ledit boîtier.

On connait de nombreux dispositifs d'immobilisation des axes portesatellites, comme ceux à l'aide de vis à têton ou de goupilles élastiques.

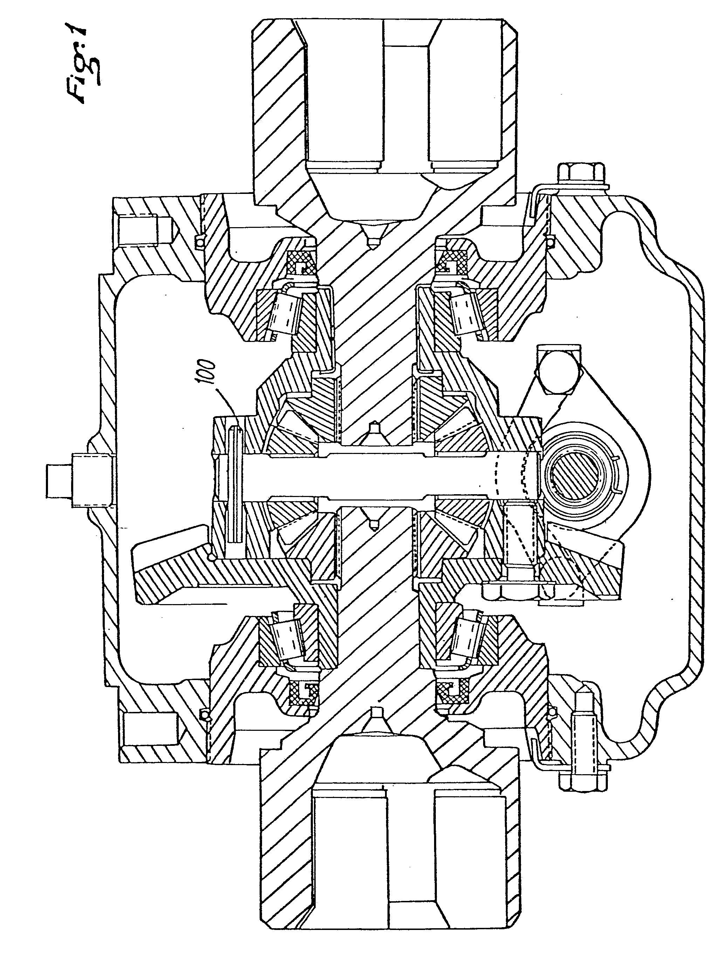

La figure 1 montre un des ces dispositifs qui dans ce cas est un système à goupilles élastiques 100. Ces dispositifs présentent l'inconvénient de réclamer des pièces supplémentaires et de nécessite des usinages précis, ce qui entraine une augmentation du coût du différentiel de transmission.

Le but de la présente invention est de proposer un système d'affichage et de tenu de l'axe des porte-satellites qui évite les inconvénients précédents en supprimant toutes les pièces supplémentaires.

A cet effet, l'invention a pour objet un différentiel de transmission comprenant un boîter renfermant deux planétaires coniques menés et des satellites coniques d'entrainement de ces derniers montés fous sur un axe monté au travers d'orifices correspondants ménagés dans le boîter, ledit axe étant maintenu en position à l'aide d'un têton circulaire à l'extrémité de l'ensemble du planétaire de fermeture du différentiel qui coopère avec une gorge dudit axe.

Ce têton peut être soit à l'extrémité d'un arbre de sortie d'un planétaire mâle soit à l'extrémité d'un planétaire femelle suivant l'architecture du différentiel en question.

Un tel dispositif suivant l'invention présente l'avantage d'être simple, tout en permettant de libérer l'axe porte-satellite en rotation, ce qui diminue les cas de grippage des satellites sur leur axe, et tout en satisfaisant à l'exigence de permettre un contrôle de fabrication visuel destiné à s'assurer que les pièces constitutives du différentiel sont bien en place.

D'autres caractéristiques et avantages de la présente invention ressortiront de la description qui suit de modes de réalisation donnée à titre d'exemple, en référence aux dessins annexés sur lesquels:

—La figure 2 est une vue en coupe d'un différentiel suivant l'invention avec deux planétaires mâles montés sur arbres de sortie.

—La figure 3 est une vue en coupe d'un différentiel suivant l'invention avec un planétaire mâle et un planétaire femelle.

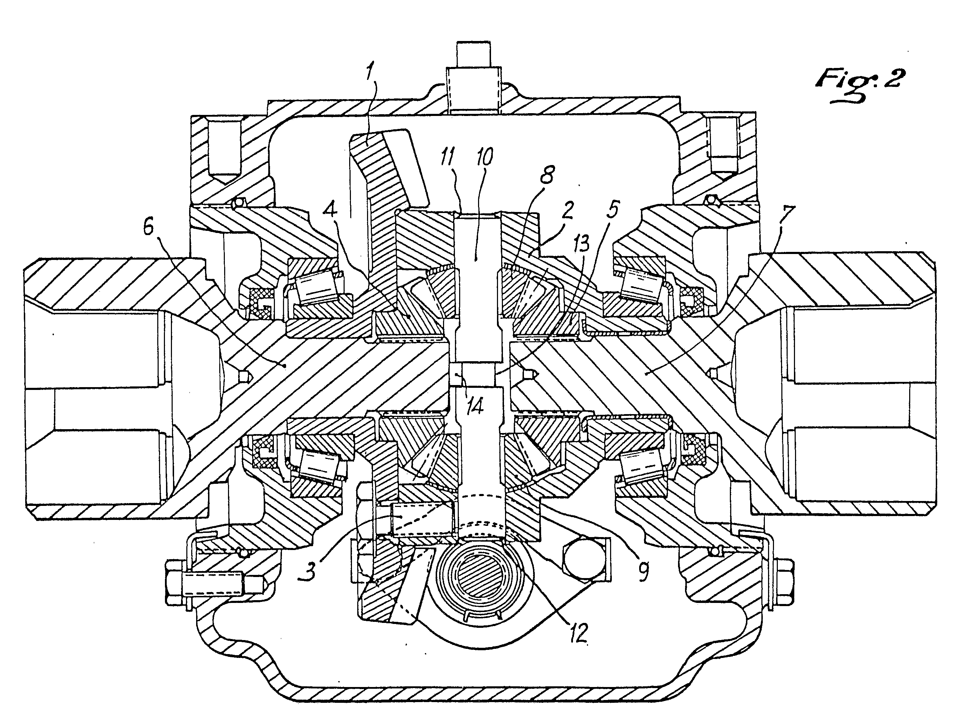

Le boîtier de différentiel représenté à la figure 2 est constitué en deux parties: une couronne d'entrainement dentée 1 qui est l'élément mené du renvoi d'angle usuel faisant office de flasque; et un corps de boîtier proprement dit 2 assemblé par des vis 3, sur ladite couronne 1. Le boîtier renferme deux planétaires coniques mâles 4 et 5 respectivement reliés à deux arbres de sortie opposés 6 et 7, le planétaire 4 étant le planétaire mâle de fermeture. Avec ces planétaires coopèrent deux satellites coniques opposés 8 et 9 montés fous sur un axe 10 luimême monté au travers d'orifices correspondants 11 et 12 aménagés sur le boîtier 2. L'axe 10 est ainsi monté fou dans les orifices 11 et 12 dudit boîtier 2. Cet axe 10 est tenu au moyen d'une gorge circulaire à section rectangulaire 13 aménagée dans ledit axe 10, dans laquelle vient s'engager on têton circulaire 14 aménagé à l'extrémité de l'arbre de sortie 6.

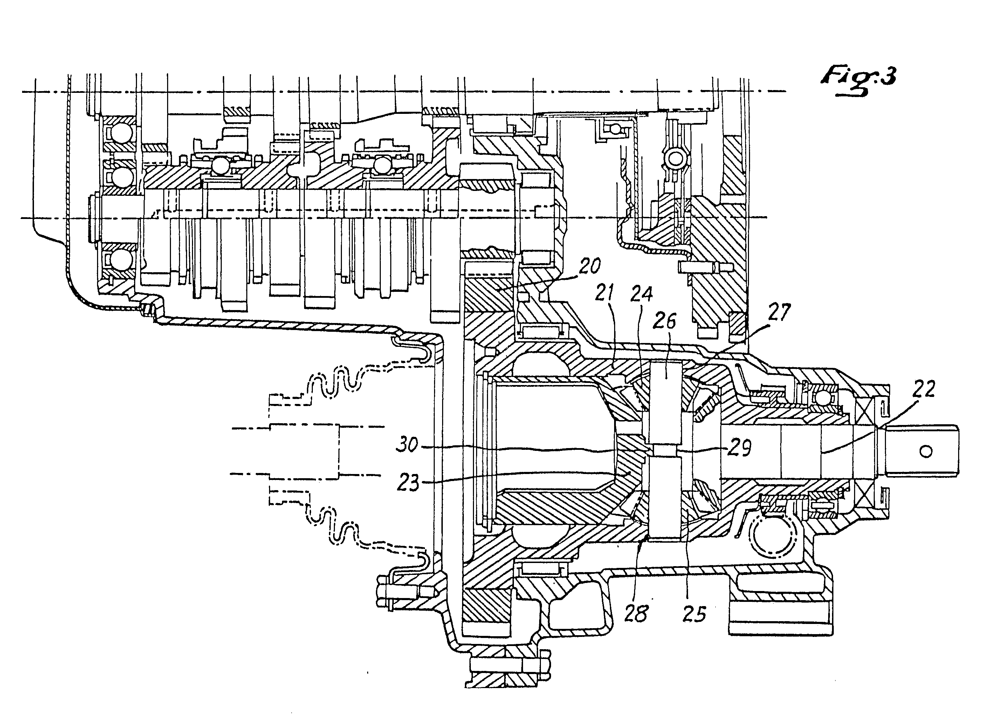

La figure 3 illustre une autre architecture de différentiel comportant le dispositif de l'invention. Le boîtier de différentiel de la figure 3 est constitué en deux parties: une couronne d'entrainement dentée 20 qui est l'élément mené du renvoi d'angle usuel; un corps de boîtier proprement dit 21 qui est solidaire de ladite couronne 20. Le boîtier renferme un planétaire conique mâle 22 et un planétaire conique femelle de fermeture 23. Avec ces planétaires coopèrent deux satellites coniques opposés 24 et 25 montés fous sur un axe 26 lui-même monté au travers d'orifices correspondants 27 et 28 aménagés dans le boîtier 21. Comme dans le cas de la figure 2, l'axe 26 est ainsi monté fou dans les orifices 27 et 28 dudit boîtier 21. Cet axe 26 est tenu au moyen d'une gorge circulaire à section rectangulaire 29 aménagée dans ledit axe 26, dans laquelle vient s'engager un têton circulaire 30 réalisé à l'extrémité du planétaire femelle de fermeture 23.

### Revendications

1. Différentiel de transmission comprenant un boîtier renfermant deux planétaire coniques (4, 5; 22, 23) menés et des satellites coniques (8, 9; 24, 25) d'entrainement de ces derniers montés fous sur un axe (10; 26) monté au travers d'orifices (11, 12; 27, 28) correspondants ménagés dans le boîtier (2; 21) caractérisé en ce que ledit axe (10; 26) est maintenu en position à l'aide d'un têton circulaire (14; 30) à l'extrémité de l'ensemble du planétaire de fermeture du différentiel qui coopére avec une gorge (13; 29) dudit axe.

2. Différentiel de transmission selon la revendication 1, caractérisé en ce que le têton circulaire (14) est à l'extrémité de l'axe de sortie (6) d'un planétaire mâle de fermeture (4).

3. Différentiel de transmission selon la revendication 1, caractérisé en ce que le têton circulaire (30) est à l'extrémité d'un planétaire femelle de fermeture (23).

**Patentansprüche**

1. Differentialgetriebe mit einem Getriebekasten, enthaltend zwei getriebene konische Planetenräder (4, 5; 22, 23) und zwei konische Antriebs-Satellitenräder (8, 9; 24, 25) dieser letzteren, die alle auf einer Welle (10; 20) montiert sind, die durch entsprechend eingearbeitete Öffnungen (11, 12; 27, 28) im Getriebekasten montiert ist, dadurch gekennzeichnet, daß die genannte Welle (10; 26) mit Hilfe einer runden Warze (14; 30) am Ende der Eaugruppe des Abschlußplanetenrads des Differentialgetriebes, die in eine Hohlkehle (13; 29) der genannten Welle eingreift, in ihrer Lage gehalten wird.

2. Differentialgetriebe gemäß Anspruch 1, dadurch gekennzeichnet, daß die runde Warze (14) am Ende der Ausgangswelle (6) eines Innen-Abschlußplanetenrads liegt.

3. Differentialgetriebe gemäß Anspruch 1, dadurch gekennzeichnet, daß die runde Warze (30) am Ende eines Außen-Abschlußplanetenrads (23) liegt.

**Claims**

1. A transmission differential consisting of a case containing two driven sun bevel gears (4, 5; 22, 23) and planet bevel gears (8, 9; 24, 25) driving the latter mounted loose on a pin (10, 26) mounted through corresponding holes (11, 12; 27, 28) made in the case (2, 21), characterized in that the said pin (10, 26) is held in position by means of a circular peg (14, 30) at the end of the differential closing sun gear assembly which engages with a groove (13, 29) in the said pin.

2. The transmission differential according to Claim 1, characterized in that the circular peg (14) is on the end of the output shaft (6) of a male closing sun gear (4).

3. The transmission differential according to Claim 1, characterized in that the circular peg (30) is on the end of a female closing sun gear (23).

Fig.1

100

Fig.2

Fig.3